# EUROPÄISCHE PATENTANMELDUNG

(11) **EP 4 428 006 A1**
(43) Veröffentlichungstag der Anmeldung: **11.09.2024**
(21) Anmeldenummer: 23160790.4
(22) Anmeldetag: 08.03.2023
(51) Int. Cl.: B61D 27/00, B61C 17/04, B60H 1/00, B60H 1/02, B60H 1/32, B60L 58/33

(54) **KLIMATISIERUNG EINES WASSERSTOFFBETRIEBENEN SCHIENENFAHRZEUGES**

(71) Anmelder: Siemens Aktiengesellschaft, 80333 München (DE); Siemens Mobility GmbH, 81739 München (DE)
(72) Erfinder: Danov, Vladimir, 91056 Erlangen (DE); Meinert, Michael, 91056 Erlangen (DE); Reissner, Florian, 90411 Nürnberg (DE)
(74) Vertreter: Siemens Patent Attorneys

(57) **Zusammenfassung**

Es wird eine zur Klimatisierung eines wasserstoffbetriebenen Schienenfahrzeuges vorgeschlagen, wobei das Schienenfahrzeug einen Wasserstoffkreislauf für seinen Betrieb umfasst. Die Vorrichtung ist dadurch gekennzeichnet, dass diese eine Absorptionskältemaschine (1) mit einem Kältemittelkreislauf (2) zur Klimatisierung umfasst, wobei der Kältemittelkreislauf (2) und der Wasserstoffkreislauf derart thermisch gekoppelt sind, dass Wasserstoff als Wärmequelle (10) für den Betrieb der Absorptionskältemaschine (1) verwendbar ist.

Weiterhin betrifft die Erfindung ein wasserstoffbetriebenes Schienenfahrzeug sowie ein Verfahren zur Klimatisierung eines wasserstoffbetriebenen Schienenfahrzeuges.

## Beschreibung

Die Erfindung betrifft eine Vorrichtung gemäß dem Oberbegriff des Patentanspruches 1, ein Schienenfahrzeug gemäß dem Oberbegriff des Patentanspruches 8 sowie ein Verfahren gemäß dem Oberbegriff des Patentanspruches 9.

Schienenfahrzeuge, die nicht oberleitungsgebunden sind, werden typischerweise mittels eines Dieselmotors angetrieben beziehungsweise versorgt. Hierbei müssen Innenräume oder Komponenten des Schienenfahrzeuges ebenfalls beheizt und/oder gekühlt werden.

Die Heizung erfolgt typischerweise mittels der Abwärme des Dieselmotors im Fahrbetrieb oder durch Zusatzheizungen mit direkter Dieselverbrennung zur Wärmeerzeugung im Stillstand des Schienenfahrzeuges. Weiterhin können Widerstandsheizungen als zusätzliche Heizungen verwendet werden. Dadurch kann eine höhere Heizleistung bereitgestellt werden oder im alleinigen Betrieb können diese einen leisen Betrieb sicherstellen, beispielsweise für eine nächtliche Abstellung in der Nähe von Wohngebieten.

Die Kühlung erfolgt typischerweise im Fahrbetrieb mittels Kompressionswärmepumpen, wobei diese die durch den Dieselmotor bereitgestellte mechanische und/oder elektrische Energie für ihren Betrieb verwenden.

Bei wasserstoffbetriebenen Schienenfahrzeugen erfolgt die Heizung oder Kühlung nach dem Stand der Technik mittels elektrischer Energie einer Batterie. Die Batterie wird hierbei über eine Brennstoffzelle des wasserstoffbetriebenen Schienenfahrzeuges geladen, welche den Wasserstoff verbraucht. Nachteilig hieran ist der geringe Wirkungsgrad, der genannten Heizung/Kühlung.

Der vorliegenden Erfindung liegt die Aufgabe zugrunde, eine effizientere Klimatisierung für ein wasserstoffbetriebenes Schienenfahrzeug bereitzustellen.

Die Aufgabe wird durch eine Vorrichtung mit den Merkmalen des unabhängigen Patentanspruches 1, durch ein Schienenfahrzeug mit den Merkmalen des unabhängigen Patentanspruches 8 sowie durch ein Verfahren mit den Merkmalen des unabhängigen Patentanspruches 9 gelöst. In den abhängigen Patentansprüchen sind vorteilhafte Ausgestaltungen und Weiterbildungen der Erfindung angegeben.

Die erfindungsgemäße Vorrichtung zur Klimatisierung eines wasserstoffbetriebenen Schienenfahrzeuges, wobei das Schienenfahrzeug einen Wasserstoffkreislauf für seinen Betrieb umfasst, ist dadurch gekennzeichnet, dass die Vorrichtung eine Absorptionskältemaschine mit einem Kältemittelkreislauf zur Klimatisierung umfasst, wobei der Kältemittelkreislauf und der Wasserstoffkreislauf derart thermisch gekoppelt sind, dass Wasserstoff als Wärmequelle für den Betrieb der Absorptionskältemaschine verwendbar ist.

Ein wasserstoffbetriebenes Schienenfahrzeug kann ein Schienenfahrzeug sein, welches wenigstens teilweise Wasserstoff für seinen Betrieb, insbesondere für seinen Fahrbetrieb, verwendet. Hierzu umfasst das Schienenfahrzeug einen Wasserstoffkreislauf.

Weiterhin umfasst das wasserstoffbetriebene Schienenfahrzeug typischerweise einen Wasserstofftank und eine Brennstoffzelle. Mittels der Brennstoffzelle wird Wasserstoff aus dem Wasserstofftank wenigstens teilweise verstromt und somit elektrische Energie bereitgestellt. Die dadurch bereitgestellte elektrische Energie kann für den Fahrtbetrieb und/oder für den Betrieb weiterer Komponenten des Schienenfahrzeuges verwendet werden.

Eine Klimatisierung des Schienenfahrzeuges kann eine Heizung und/oder Kühlung eines Innenraumes und/oder einer oder mehrerer Komponenten des Schienenfahrzeuges sein.

Weiterhin kann das wasserstoffbetriebene Schienenfahrzeug mehrere Schienenfahrzeuge im Verbund umfassen, das heißt als wasserstoffbetriebener Zug ausgebildet sein.

Gemäß der Erfindung ist die Vorrichtung zur Klimatisierung eines wasserstoffbetriebenen Schienenfahrzeuges ausgebildet. Hierzu umfasst die Vorrichtung eine Absorptionskältemaschine (Absorptions-Wärmepumpe). Die Absorptionskältemaschine umfasst einen Kältemittelkreislauf für ein Kältemittel.

Erfindungsgemäß sind der Wasserstoffkreislauf und der Kältemittelkreislauf der Absorptionskältemaschine derart thermisch gekoppelt, dass Wärme des Wasserstoffes als Wärmequelle für die Absorptionskältemaschine verwendbar ist. Mit anderen Worten ist erfindungsgemäß der Wasserstoff direkt für den Betrieb der Absorptionskältemaschine nutzbar. Hierbei wird somit der Wasserstoff, beispielsweise in einem Desorber der Absorptionskältemaschine, als thermischer Antrieb zur Wärmezufuhr verwendet.

Durch die erfindungsgemäß vorgesehene Absorptionskältemaschine ist eine klassische Kompressionskältemaschine, die durch die elektrische Energie der Brennstoffzelle betrieben wird, nicht mehr zur Klimatisierung erforderlich. Die Klimatisierung erfolgt somit durch einen thermischen Antrieb und nicht durch elektrische Energie mittels Motoren/Kompressoren (mechanischer Antrieb). Somit kann die verlustbehaftete Umwandlungs- (Brennstoffzelle) und Speicherkette (Batterie) erfindungsgemäß umgangen werden.

Durch die Absorptionskältemaschine wird zudem eine geräuschärmere Klimatisierung bereitgestellt. Dadurch ist es nicht erforderlich die Absorptionskältemaschine, beispielsweise aufgrund vorliegender Lärm-Randbedingungen, abzustellen. Weiterhin zeigt sich, dass die Verwendung einer Absorptionskältemaschine gegenüber einer typischerweise verwendeten Kompressionskältemaschine effizienter ist, wenn die gesamte Kette vom Wasserstoff bis zur Klimatisierung berücksichtigt wird. Insbesondere bei einer Wärmeerzeugung (Heizung) sind deutlich Effizienzvorteile vorhanden.

Wird beispielsweise ein Wärmeverhältnis von 1,3 für die Absorptionskältemaschine angenommen, dann können aus 1 kWh Wasserstoff 1,3 kWh Wärme bereitgestellt werden. Bei Verwendung einer Kompressionskältemaschine mit einer typischen Leistungszahl von 3,5, einer Brennstoffzelle mit einem Wirkungsgrad von 0,4 und einem Batteriewirkungsgrad von 0,8 kann aus 1 kWh Wasserstoff lediglich 1,1 kWh Wärme erzeugt werden.

Weiterhin wird durch die erfindungsgemäße effizientere Klimatisierung weniger Wasserstoff benötigt, sodass dadurch die Reichweite des Schienenfahrzeuges erhöht wird.

Das erfindungsgemäße wasserstoffbetriebene Schienenfahrzeug, ist dadurch gekennzeichnet, dass das Schienenfahrzeug eine Vorrichtung gemäß der vorliegenden Erfindung und/oder einer ihrer Ausgestaltungen zur Klimatisierung eines Innenraumes und/oder einer Komponente des Schienenfahrzeuges umfasst.

Es ergeben sich zur erfindungsgemäßen Vorrichtung gleichartige, gleichwertige und gleichwirkende Vorteile und/oder Ausgestaltungen des erfindungsgemäßen Schienenfahrzeuges.

Das erfindungsgemäße Verfahren zur Klimatisierung eines wasserstoffbetriebenen Schienenfahrzeuges, wobei das Schienenfahrzeug einen Wasserstoffkreislauf für seinen Betrieb umfasst, ist gekennzeichnet dadurch, dass die Vorrichtung eine Absorptionskältemaschine mit einem Kältemittelkreislauf zur Klimatisierung umfasst, wobei der Kältemittelkreislauf und der Wasserstoffkreislauf derart thermisch gekoppelt sind, dass Wasserstoff als Wärmequelle für den Betrieb der Absorptionskältemaschine verwendet wird.

Es ergeben sich zur erfindungsgemäßen Vorrichtung gleichartige, gleichwertige und gleichwirkende Vorteile und/oder Ausgestaltungen des erfindungsgemäßen Verfahrens.

Gemäß einer vorteilhaften Ausgestaltung der Erfindung sind der Kältemittelkreislauf und der Wasserstoffkreislauf derart zusätzlich thermisch gekoppelt, dass eine Abwärme einer Brennstoffzelle des Schienenfahrzeuges als weitere Wärmequelle für den Betrieb der Absorptionskältemaschine verwendbar ist.

Vorteilhafterweise kann dadurch die Brennstoffzelle als weitere Abwärmequelle für den Betrieb der Absorptionskältemaschine verwendet werden. Mit anderen Worten wird dadurch wenigstens ein Teil der Abwärme der Brennstoffzelle, insbesondere während des Fahrbetriebs des Schienenfahrzeuges, zum Antrieb des Desorbers der Absorptionskältemaschine genutzt. Hierbei können die Wärmeströme aus Absorber und/oder Kondensator der Absorptionskältemaschine zur Heizung des Schienenfahrzeuges verwendet werden.

Wird die Abwärme alternativ dem Verdampfer der Absorptionskältemaschine zugeführt, dann kann die Vorrichtung zur Kühlung des Schienenfahrzeuges, das heißt zur Kühlung eines oder mehrerer Innenräume und/oder Komponenten des Schienenfahrzeuges, verwendet werden.

In einer vorteilhaften Weiterbildung der Erfindung sind der Kältemittelkreislauf und der Wasserstoffkreislauf zusätzlich derart thermisch gekoppelt, dass eine Abwärme eines Metallhydridspeichers als weitere Wärmequelle für den Betrieb der Absorptionskältemaschine verwendbar ist.

Mittels eines Metallhydridspeichers kann Wasserstoff absorbiert werden, wobei hierbei Wärme frei wird. Diese Abwärme wird vorteilhafterweise als weitere Abwärmequelle beziehungsweise als weitere Wärmequelle für den Betrieb der Absorptionskältemaschine verwendet. Hierbei umfasst das Schienenfahrzeug den Metallhydridspeicher.

Gemäß einer vorteilhaften Ausgestaltung der Erfindung ist der Kältemittelkreislauf mit weiteren Komponenten des Schienenfahrzeuges, insbesondere einer Batterie, derart thermisch gekoppelt, dass Abwärme der weiteren Komponenten als weitere Wärmequelle für den Betrieb der Absorptionskältemaschine verwendbar ist.

Mit anderen Worten wird die Abwärme von weiteren Komponenten des Schienenfahrzeuges dem Desorber der Absorptionskältemaschine zugeführt.

Dadurch können vorteilhafterweise weitere Abwärmequellen als Wärmequelle zum Betrieb der Absorptionskältemaschine verwendet werden.

In einer vorteilhaften Weiterbildung der Erfindung umfasst die Vorrichtung einen Wasserstoffbrenner.

Mit anderen Worten wird zur Heizung zusätzlich ein Wasserstoffbrenner verwendet.

Dadurch kann vorteilhafterweise eine zusätzliche Heizung bereitgestellt werden, die im Gegensatz zu einer Widerstandsheizung den Wasserstoff direkt verwendet. Dadurch kann der Umweg über die Brennstoffzelle, wie bei einer Widerstandsheizung, umgangen werden, sodass der Wirkungsgrad der zusätzlichen Heizung gegenüber einer Widerstandsheizung, die ihren Strom aus der vergleichsweisen wenig effizienten Brennstoffzelle bezieht, deutlich verbessert wird.

Gemäß einer vorteilhaften Ausgestaltung der Erfindung ist zur Heizung die thermische Kopplung mittels eines Desorbers der Absorptionskältemaschine ausgebildet, wobei hierbei durch einen Absorber und/oder Kondensator der Absorptionskältemaschine Wärme für die Heizung bereitstellbar ist.

Mit anderen Worten wird zur Heizung Wärme des Wasserstoffes einem Desorber der Absorptionskältemaschine zugeführt, wobei durch einen Absorber und/oder Kondensator der Absorptionskältemaschine Wärme für die Heizung bereitgestellt wird.

Dadurch wird vorteilhafterweise ein effizienter und geräuscharmer Heizungsbetrieb der Absorptionskältemaschine ermöglicht. Mit anderen Worten können dadurch ein oder mehrere Innenräume, insbesondere eine oder mehrere Fahrgastkabinen, und/oder eine oder mehrere Komponenten des Schienenfahrzeuges beheizt werden. Hierbei wird dem Desorber der Absorptionskältemaschine Wärme aus dem Wasserstoff, Abwärme der Brennstoffzelle und/oder Abwärme weiterer Komponenten des Schienenfahrzeuges zugeführt. Diese zugeführte Wärme wird dann wenigstens teilweise mit einem höheren Temperaturniveau durch den Absorber und/oder Kondensator der Absorptionskältemaschine für das Heizen bereitgestellt.

In einer vorteilhaften Weiterbildung der Erfindung ist zur Kühlung die thermische Kopplung mittels eines Verdampfers der Absorptionskältemaschine ausgebildet.

Mit anderen Worten erfolgt zur Kühlung eine Wärmeaufnahme durch einen Verdampfer der Absorptionskältemaschine.

Dadurch wird eine Kühlung des Schienenfahrzeuges, das heißt eine Kühlung eines oder mehrerer Innenräume und/oder einer oder mehrerer Komponenten des Schienenfahrzeuges durch eine Wärmeaufnahme über den Verdampfer der Absorptionskältemaschine ermöglicht. Hierbei wird dem Innenraum beziehungsweise der Komponente Wärme entzogen und über den Verdampfer der Absorptionskältemaschine zugeführt, die dann über die Absorptionskältemaschine an die Umgebungsluft des Schienenfahrzeuges abgegeben werden kann.

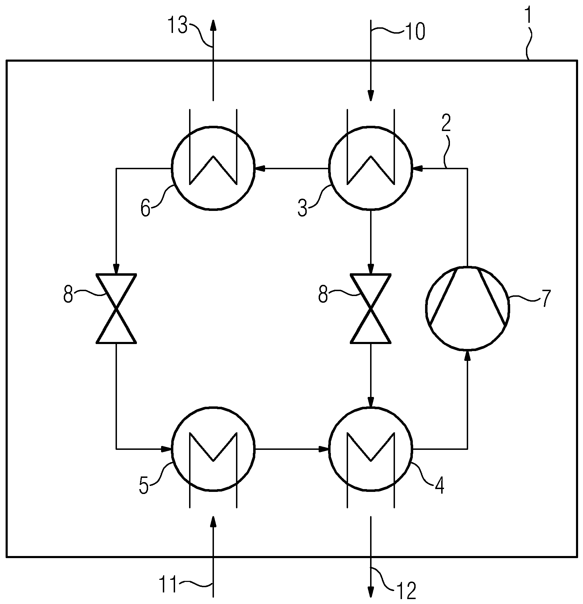

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert eine Vorrichtung gemäß einer Ausgestaltung der vorliegenden Erfindung.

Gleichartige, gleichwertige oder gleichwirkende Elemente können in der Figur mit denselben Bezugszeichen versehen sein.

Die Figur zeigt eine Vorrichtung gemäß einer Ausgestaltung der Erfindung zur Klimatisierung eines wasserstoffbetriebenen Schienenfahrzeuges. Zum Betrieb des Schienenfahrzeuges, weist dieses einen Wasserstoffkreislauf auf.

Die Vorrichtung umfasst eine Absorptionskältemaschine 1.

Die Absorptionskältemaschine umfasst einen Kältemittelkreislauf 2. Weiterhin umfasst die Absorptionskältemaschine 1 einen Desorber 3, einen Absorber 4, einen Verdampfer 5, einen Kondensator 6 sowie eine Pumpe 7. Der Desorber 3, der Absorber 4, der Verdampfer 5, der Kondensator 6 und die Pumpe 7 sind fluidisch in den Kältemittelkreislauf 2 eingebunden. Der Kältemittelkreislauf 2 weist typischerweise weitere Komponenten, beispielsweise mehrere Expansionsventile 8, auf.

Der Kältemittelkreislauf 2 ist, beispielsweise über den Desorber 3, mit dem Wasserstoffkreislauf des wasserstoffbetriebenen Schienenfahrzeuges thermisch gekoppelt. Mit anderen Worten kann dem Desorber 3 Wasserstoff als Wärmequelle 10 zugeführt werden. Hierbei kann der Wasserstoff selbst und/oder eine durch seine Verbrennung erzeugte Wärme als Wärmequelle 10 verwendet werden. Durch den Desorber 3 wird diese Wärme 10 der Absorptionskältemaschine 1 und somit dem Kältemittelkreislauf 2 zugeführt. Es können hierbei weitere Wärmequellen 10 zusätzlich verwendet werden, insbesondere Abwärme aus Batterien und/oder Abwärme einer Brennstoffzelle und/oder Abwärme elektronischer Komponenten, beispielsweise von Wechselrichtern.

Mittels der Absorptionskältemaschine 1 wird die über den Desorber 3 zugeführte Wärme 1 effizient und geräuscharm auf ein höheres Temperaturniveau angehoben und kann über den Absorber 4 und/oder den Verdampfer 6 als Nutzwärme 12 beziehungsweise Nutzwärme 13 zur Heizung des Schienenfahrzeuges, insbesondere einer Fahrgastkabine und/oder weiterer Komponenten des Schienenfahrzeuges, verwendet werden.

Eine Kühlung kann über eine Wärmeaufnahme 11 über den Verdampfer 5 erfolgen. Hierbei wird einer zu kühlenden Komponente des Schienenfahrzeuges, beispielsweise einer Fahrgastkabine und/oder einer elektronischen Komponente, Wärme 11 entzogen und somit die Komponente gekühlt. Dadurch wird in diesem Sinne eine Nutzkälte 11 bereitgestellt.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Absorptionskältemaschine
- 2: Kältemittelkreislauf
- 3: Desorber
- 4: Absorber
- 5: Verdampfer
- 6: Kondensator
- 7: Pumpe
- 10: Wärmequelle
- 11: Nutzwärme
- 12: Nutzwärme
- 13: Nutzwärme

## Patentansprüche

1. Vorrichtung zur Klimatisierung eines wasserstoffbetriebenen Schienenfahrzeuges, wobei das Schienenfahrzeug einen Wasserstoffkreislauf für seinen Betrieb umfasst, **dadurch gekennzeichnet, dass** die Vorrichtung eine Absorptionskältemaschine (1) mit einem Kältemittelkreislauf (2) zur Klimatisierung umfasst, wobei der Kältemittelkreislauf (2) und der Wasserstoffkreislauf derart thermisch gekoppelt sind, dass Wasserstoff als Wärmequelle (10) für den Betrieb der Absorptionskältemaschine (1) verwendbar ist.

2. Vorrichtung gemäß Anspruch 1, **dadurch gekennzeichnet, dass** der Kältemittelkreislauf (2) und der Wasserstoffkreislauf derart zusätzlich thermisch gekoppelt sind, dass eine Abwärme einer Brennstoffzelle des Schienenfahrzeuges als weitere Wärmequelle (10) für den Betrieb der Absorptionskältemaschine (1) verwendbar ist.

3. Vorrichtung gemäß Anspruch 1 oder 2, **dadurch gekennzeichnet, dass** der Kältemittelkreislauf (2) und der Wasserstoffkreislauf zusätzlich derart thermisch gekoppelt sind, dass eine Abwärme eines Metallhydridspeichers als weitere Wärmequelle (10) für den Betrieb der Absorptionskältemaschine (1) verwendbar ist.

4. Vorrichtung gemäß einem der vorhergehenden Ansprüche, **dadurch gekennzeichnet, dass** der Kältemittelkreislauf (2) mit weiteren Komponenten des Schienenfahrzeuges, insbesondere einer Batterie, derart thermisch gekoppelt ist, dass Abwärme der weiteren Komponenten als weitere Wärmequelle (10) für den Betrieb der Absorptionskältemaschine (1) verwendbar ist.

5. Vorrichtung gemäß einem der vorhergehenden Ansprüche, **dadurch gekennzeichnet, dass** die Vorrichtung einen Wasserstoffbrenner umfasst.

6. Vorrichtung gemäß einem der vorhergehenden Ansprüche, **dadurch gekennzeichnet, dass** zur Heizung die thermische Kopplung mittels eines Desorbers (3) der Absorptionskältemaschine (1) ausgebildet ist, wobei hierbei durch einen Absorber (4) und/oder Kondensator (6) der Absorptionskältemaschine (1) Wärme für die Heizung bereitstellbar ist.

7. Vorrichtung gemäß einem der vorhergehenden Ansprüche, **dadurch gekennzeichnet, dass** zur Kühlung die thermische Kopplung mittels eines Verdampfers (5) der Absorptionskältemaschine (1) ausgebildet ist.

8. Wasserstoffbetriebenes Schienenfahrzeug, **dadurch gekennzeichnet, dass** das Schienenfahrzeug eine Vorrichtung gemäß einem der vorhergehenden Ansprüche zur Klimatisierung eines Innenraumes und/oder einer Komponente des Schienenfahrzeuges umfasst.

9. Verfahren zur Klimatisierung eines wasserstoffbetriebenen Schienenfahrzeuges, wobei das Schienenfahrzeug einen Wasserstoffkreislauf für seinen Betrieb umfasst, **gekennzeichnet dadurch, dass** die Vorrichtung eine Absorptionskältemaschine (1) mit einem Kältemittelkreislauf (2) zur Klimatisierung umfasst, wobei der Kältemittelkreislauf (2) und der Wasserstoffkreislauf derart thermisch gekoppelt sind, dass Wasserstoff als Wärmequelle (10) für den Betrieb der Absorptionskältemaschine (1) verwendet wird.

10. Verfahren gemäß Anspruch 9, **gekennzeichnet dadurch, dass** zur Heizung Wärme des Wasserstoffes einem Desorber (3) der Absorptionskältemaschine (1) zugeführt wird, wobei durch einen Absorber (4) und/oder Kondensator (6) der Absorptionskältemaschine (1) Wärme für die Heizung bereitgestellt wird.

11. Verfahren gemäß Anspruch 10, **gekennzeichnet dadurch, dass** Abwärme weiterer Komponenten des Schienenfahrzeuges dem Desorber (3) der Absorptionskältemaschine (1) zugeführt wird.

12. Verfahren gemäß Anspruch 10 oder 11, **gekennzeichnet dadurch, dass** zur Heizung zusätzlich ein Wasserstoffbrenner verwendet wird.

13. Verfahren gemäß einem der Ansprüche 9 oder 12, **gekennzeichnet dadurch, dass** zur Kühlung eine Wärmeaufnahme durch einen Verdampfer (5) der Absorptionskältemaschine (1) erfolgt.
